# EUROPÄISCHE PATENTSCHRIFT

(11) **EP 2 707 244 B1**
(45) Veröffentlichungstag und Bekanntmachung des Hinweises auf die Patenterteilung: **22.04.2020**
(21) Anmeldenummer: 11749757.8
(22) Anmeldetag: 21.07.2011
(51) Int. Cl.: B60L 53/30, B60L 53/68

(54) **LADESTATION**
CHARGING STATION
STATION DE CHARGE

(43) Veröffentlichungstag der Anmeldung: 19.03.2014
(73) Patentinhaber: Valeo Siemens eAutomotive Germany GmbH, 91056 Erlangen (DE)
(72) Erfinder: BRILL, Roland, 91056 Erlangen (DE); SÄMANN, Stefan, 91334 Hemhofen (DE)
(74) Vertreter: Dr. Gassner & Partner mbB
(86) Internationale Anmeldenummer: PCT/EP2011/062538
(87) Internationale Veröffentlichungsnummer: WO 2013/010592

(56) Entgegenhaltungen:
- EP-A1- 2 273 462
- DE-U1-202008 014 768
- US-A1- 2010 017 249

## Beschreibung

Die Erfindung bezieht sich auf eine Ladestation zum Laden eines Elektrofahrzeugs mit einer Steuereinrichtung zur Steuerung des Ladevorgangs.

Eine derartige Ladestation wird beispielsweise vom Energiekonzern RWE unter dem Produktnamen "Smart-Station" angeboten. Bei dieser Ladestation ist es möglich, eine Authentifizierung des Kunden über das Internet vorzunehmen. Die Internetverbindung kann beispielsweise mit Hilfe eines Smartphones erfolgen.

Das Dokument US 2010/017249 A1 offenbart eine Ladestation zum Laden eines Elektrofahrzeugs mit einer Steuereinrichtung zur Steuerung des Ladevorgangs, wobei
- die Ladestation eine mit der Steuereinrichtung in Verbindung stehende Kommunikationseinrichtung aufweist, die eine elektromagnetische Kommunikation mit einem externen drahtlosen Telekommunikationsendgerät ermöglicht, und
- die Steuereinrichtung derart ausgestaltet ist, dass sie eine Fernsteuerung zumindest einer den Ladevorgang betreffenden Funktion der Ladestation durch das externe drahtlose Telekommunikationsendgerät über die Kommunikationseinrichtung ermöglicht.

Darüber hinaus sind Ladestationen mit einer Nahfeld-kommunikationseinrichtung auch aus der DE 20 2008 014 768 U1 und der EP 2 273 462 A1 bekannt.

Der Erfindung liegt die Aufgabe zugrunde, eine Ladestation anzugeben, die sich besonders komfortabel bedienen lässt. Diese Aufgabe wird erfindungsgemäß durch eine Ladestation mit den Merkmalen gemäß Patentanspruch 1 gelöst. Vorteilhafte Ausgestaltungen der erfindungsgemäßen Ladestation sind in Unteransprüchen angegeben.

Danach ist erfindungsgemäß vorgesehen, dass die Ladestation eine mit der Steuereinrichtung in Verbindung stehende Nahfeldkommunikationseinrichtung aufweist, die eine elektromagnetische Nahfeldkommunikation mit einem externen drahtlosen Telekommunikationsendgerät ermöglicht, und die Steuereinrichtung derart ausgestaltet ist, dass sie eine Fernsteuerung zumindest einer den Ladevorgang betreffenden Funktion (Ladefunktion) der Ladestation durch das externe drahtlose Telekommunikationsendgerät über die Nahfeldkommunikationseinrichtung ermöglicht, wobei die Ladestation eine Fernfeldkommunikationseinrichtung aufweist, die eine elektromagnetische Fernfeldkommunikation mit dem externen drahtlosen Telekommunikationsendgerät ermöglicht, wobei die Ladestation ein Umschaltmodul aufweist, das derart ausgestaltet ist, dass es eine Umschaltung einer bestehenden Nahfeldkommunikation über die Nahfeldkommunikationseinrichtung auf eine Fernfeldkommunikation über die Fernfeldkommunikationseinrichtung vornimmt, wenn das Empfangssignal der Nahfeldkommunikationseinrichtung mangelhaft ist und dessen Qualität und/oder Signalpegel eine vorgegebene Mindestqualitätsschwelle oder Mindestpegelschwelle unterschreitet.

Ein wesentlicher Vorteil der erfindungsgemäßen Ladestation ist darin zu sehen, dass diese nicht nur eine Authentifizierung des Kunden der Ladestation über eine Funkverbindung ermöglicht, sondern darüber hinaus auch eine Fernsteuerung des Ladevorganges bzw. der den Ladevorgang betreffenden Ladefunktionen ermöglicht. So ist es bei der erfindungsgemäßen Ladestation möglich, über eine Funkverbindung eine Fernsteuerung zumindest einer den Ladevorgang betreffenden Funktion, also einer Ladefunktion der Ladestation, vorzunehmen. Zur Fernsteuerung können beispielsweise das Öffnen eines Verschlussdeckels des elektrischen Anschlusses der Ladestation, das Freigeben eines Ladekabels der Ladestation, das Vorgeben eines gewünschten Ladestromes, der Ladebeginn und/oder das Ladeende ferngesteuert werden.

Ein weiterer wesentlicher Vorteil der erfindungsgemäßen Ladestation ist darin zu sehen, dass die Kommunikation zwischen dem Kunden und der Ladestation besonders sicher ist, da ein Abhören und/oder Manipulieren von Nahfeldkommunikationsverbindungen sehr schwierig ist. Nahfeldkommunikationsverbindungen basieren auf der Auswertung der Feldstärke des Magnetfeldes des elektromagnetischen Nahfeldes, so dass ein Abhören und/oder Manipulieren einer Nahfeldkommunikationsverbindung schwierig oder nur mit sehr hohem Aufwand möglich ist.

Um eine Manipulation und/oder Störung des Ladevorganges bestmöglich zu verhindern, wird es als vorteilhaft angesehen, wenn die Nahfeldkommunikation außerdem verschlüsselt erfolgt.

Die Nahfeldkommunikation kann beispielsweise auf dem so genannten NFC(Near Field Communication)-Standard basieren, wie er bei Mobilfunkendgeräten (z. B. Google Nexus S und Galaxy S2 der Firma Samsung) derzeit angeboten wird.

Mit Blick auf einen besonders hohen Bedienungskomfort ist vorgesehen, dass die Steuereinrichtung für alle für den Ladevorgang vorgesehenen Funktionen jeweils einen Steuerbefehl vorsieht, der über die Nahfeldkommunikationseinrichtung zur Steuereinrichtung übertragen und von der Steuereinrichtung umgesetzt werden kann. Dadurch ist es also möglich, den gesamten Ladevorgang zu steuern, ohne mit einer Bedienungseinrichtung der Ladestation, sofern eine solche überhaupt vorhanden ist, körperlich in Kontakt treten zu müssen. Bei dieser Ausgestaltung kann auf eine separate Bedienungseinrichtung an der Ladestation in vorteilhafter Weise sogar völlig verzichtet werden, wodurch Vandalismusschäden effizient vorgebeugt wird. Mit anderen Worten wird eine Ladestation ohne separate Bedienungseinrichtung, bei der also eine Bedienung der Ladestation und die Eingabe aller Steuerbefehle ausschließlich ferngesteuert erfolgen, als besonders vorteilhaft angesehen.

Die Ladestation weist zusätzlich zu der bereits genannten Nahfeldkommunikationseinrichtung auch eine Fernfeldkommunikationseinrichtung auf. Eine solche Fernfeldkommunikationseinrichtung ist vorzugsweise geeignet, eine elektromagnetische Fernfeldkommunikation mit dem externen drahtlosen Telekommunikationsendgerät zu ermöglichen.

Mit der Nahfeldkommunikationseinrichtung und mit der Fernfeldkommunikationseinrichtung ist vorzugsweise ein Schnittstellenmodul verbunden, das geeignet ist, sowohl mit der Nahfeldkommunikationseinrichtung als auch mit der Fernfeldkommunikationseinrichtung zu kommunizieren bzw. mit diesen Einrichtungen Daten auszutauschen.

Es ist vorgesehen, dass die Ladestation ein Umschaltmodul aufweist, das derart ausgestaltet ist, dass es eine Umschaltung einer bestehenden Nahfeldkommunikation über die Nahfeldkommunikationseinrichtung auf eine Fernfeldkommunikation über die Fernfeldkommunikationseinrichtung (oder ein Zuschalten der Fernfeldkommunikationseinrichtung) vornimmt, wenn das Empfangssignal der Nahfeldkommunikationseinrichtung mangelhaft ist. Unter einem mangelhaften Empfangssignal wird dabei ein Empfangssignal verstanden, dessen Qualität und/oder Signalpegel eine vorgegebene Mindestqualitätsschwelle bzw. Mindestpegelschwelle unterschreitet.

Vorzugsweise steht das Schnittstellenmodul mit dem Umschaltmodul in Verbindung und wird von diesem derart angesteuert, dass wahlweise die Fernfeldkommunikationseinrichtung und/oder die Nahfeldkommunikationseinrichtung aktiviert werden.

Darüber hinaus wird es als vorteilhaft angesehen, wenn die Steuereinrichtung ein Authentifizierungsmodul umfasst, das ein über die Nahfeldkommunikationseinrichtung empfangenes Authentifizierungssignal empfangen und verarbeiten kann. Die Authentifizierung eines Nutzers der Ladestation erfolgt vorzugsweise über die Nahfeldkommunikation, da diese besonders abhör- und/oder manipulationssicher ist.

Das Authentifizierungsmodul ist vorzugsweise derart ausgestaltetet, dass es eine Umsetzung eines über die Nahfeldkommunikationseinrichtung oder die Fernfeldkommunikationseinrichtung übertragenen und einen eine Ladefunktion betreffenden Steuerbefehls blockiert, wenn die Authentifizierung erfolglos war.

Darüber hinaus wird es als vorteilhaft angesehen, wenn die Ladestation ein Rückmeldemodul umfasst, das ein den Ladevorgang und/oder die Authentifizierung betreffendes Rückmeldesignal über die Nahfeldkommunikationseinrichtung an das externe drahtlose Telekommunikationsendgerät zurücksenden kann. Mit Hilfe des Rückmeldemoduls kann die Ladestation also den Nutzer des Telekommunikationsendgerätes stets über den aktuellen Stand der Bearbeitung unterrichten.

Als besonders vorteilhaft wird des angesehen, wenn das Rückmeldemodul über das Schnittstellenmodul zusätzlich mit der Fernfeldkommunikationseinrichtung in Verbindung steht und geeignet ist, ein den Ladevorgang und/oder die erfolgreiche oder erfolglose Authentifizierung betreffendes Rückmeldesignal alternativ oder zusätzlich über die Fernfeldkommunikationseinrichtung an das externe drahtlose Telekommunikationsendgerät zurücksenden. Bei dieser Ausgestaltung ist eine weitere Rückmeldung über die Bearbeitung des Ladevorganges auch dann möglich, wenn der Benutzer des Telekommunikationsendgerätes den Bereich der Nahfeldkommunikation verlassen hat und eine Kommunikation über die Nahfeldkommunikationseinrichtung nicht mehr oder nur noch schlecht möglich ist.

Besonders einfach und kostengünstig ist es, wenn die Steuereinrichtung eine Rechnereinrichtung und einen Speicher umfasst und das Authentifizierungsmodul und/oder das Rückmeldemodul und/oder das Umschaltmodul durch Softwaremodule gebildet sind, die in dem Speicher gespeichert sind.

Darüber hinaus ist eine Anordnung mit einer Ladestation, wie sie oben beschrieben ist und einem drahtlosen Telekommunikationsendgerät offenbart.

Die Bedienung bzw. Fernsteuerung der Ladestation kann beispielsweise mit einem Mobilfunkendgerät (zum Beispiel einem Smartphone) mit NFC (Near Field Communication)-Kommunikati-onsfunktion erfolgen, sofern das Mobilfunkendgerät, wie oben erläutert, zusätzlich mit einem entsprechenden Steuermodul (z. B. Steuersoftwaremodul ("App")) zur Steuerung der Ladestation ausgestattet ist. Mobilfunkendgeräte mit NFC (Near Field Communication)-Kommunikationsfunktion werden beispielsweise von den Firmen Nokia und Samsung angeboten.

Die Erfindung wird nachfolgend anhand von Ausführungsbeispielen näher erläutert; dabei zeigen beispielhaft
- Figur 1: ein erstes Ausführungsbeispiel für eine erfindungsgemäße Anordnung, die ein Ausführungsbeispiel für eine erfindungsgemäße Ladestation sowie ein Ausführungsbeispiel für ein drahtloses Telekommunikationsendgerät umfasst,
- Figur 2: ein zweites Ausführungsbeispiel für eine erfindungsgemäße Anordnung mit Ladestation und Telekommunikationsendgerät, und
- Figur 3: ein drittes Ausführungsbeispiel für eine erfindungsgemäße Anordnung mit Ladestation und Telekommunikationsendgerät.

In den Figuren werden der Übersicht halber für identische oder vergleichbare Komponenten stets dieselben Bezugszeichen verwendet.

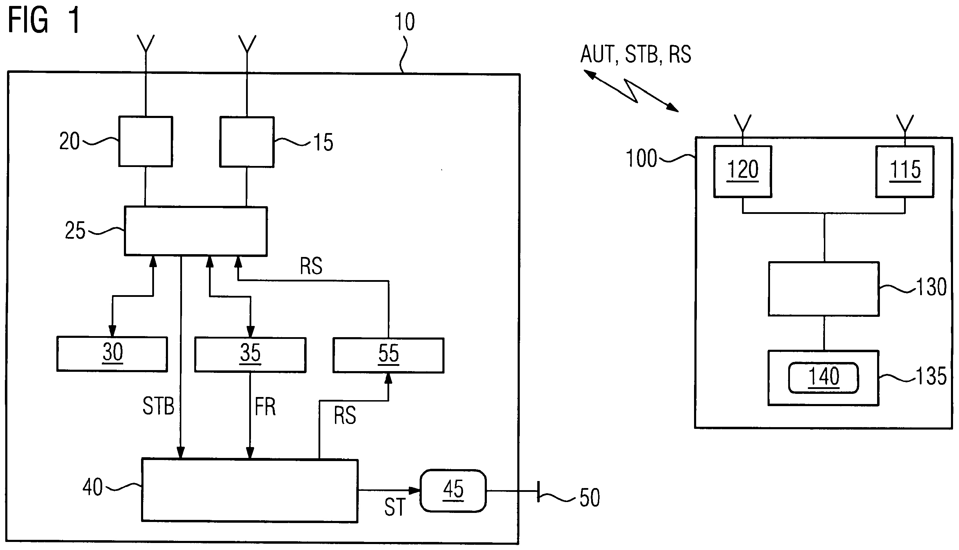

In der Figur 1 sieht man eine Ladestation 10, die mit einer Nahfeldkommunikationseinrichtung 15 sowie mit einer Fernfeldkommunikationseinrichtung 20 ausgestattet ist. Mit der Nahfeldkommunikationseinrichtung 15 sowie mit der Fernfeldkommunikationseinrichtung 20 steht ein Schnittstellenmodul 25 in Verbindung, an das ein Umschaltmodul 30 angeschlossen ist.

Die Funktion des Umschaltmoduls 30 besteht darin, je nach den aktuellen Übertragungsverhältnissen wahlweise die Nahfeldkommunikationseinrichtung 15 oder alternativ die Fernfeldkommunikationseinrichtung 20 zu aktivieren, damit Steuerbefehle empfangen und/oder Rückmeldesignale ausgesandt werden können. Zusätzlich kann das Umschaltmodul 30 das Schnittstellenmodul 25 auch derart einstellen, dass eine Kommunikation gleichzeitig sowohl über die Nahfeldkommunikationseinrichtung 15 als auch über die Fernfeldkommunikationseinrichtung 20 möglich ist.

In der Figur 1 erkennt man darüber hinaus ein Authentifizierungsmodul 35, das mit dem Schnittstellenmodul 25 in Verbindung steht. Die Aufgabe des Authentifizierungsmoduls 35 besteht darin, im Falle einer Verbindungsaufnahme durch ein externes drahtloses Telekommunikationsendgerät einen Authentifizierungsvorgang auszulösen und durchzuführen, mit dem eine Authentifizierung des externen drahtlosen Telekommunikationsendgeräts erfolgen kann.

An das Schnittstellenmodul 25 ist darüber hinaus eine Steuereinrichtung 40 angeschlossen. Die Aufgabe der Steuereinrichtung 40 besteht darin, eine nachgeordnete Ladeeinrichtung 45 anzusteuern. Die Ladeeinrichtung 45 ist mit einem elektrischen Anschluss 50 ausgestattet, bei dem es sich beispielsweise um eine Ladebuchse, einen Ladestecker oder ein Ladekabel handeln kann.

Über den elektrischen Anschluss 50 kann die Ladeeinrichtung 45 mit einem in der Figur 1 aus Gründen der Übersicht nicht weiter dargestellten Elektrofahrzeug elektrisch verbunden werden, um das Elektrofahrzeug mit der Ladeeinrichtung 45 mit elektrischer Energie aufzuladen.

In der Figur 1 ist darüber hinaus ein Rückmeldemodul 55 erkennbar, das die Steuereinrichtung 40 mit dem Schnittstellenmodul 25 verbindet. Über das Rückmeldemodul 55 ist die Steuereinrichtung 40 in der Lage, ein den Ladevorgang und/oder die Authentifizierung betreffendes Rückmeldesignal über das Schnittstellenmodul 25 und die Nahfeldkommunikationseinrichtung 15 bzw. die Fernfeldkommunikationseinrichtung 20 zu einem externen drahtlosen Telekommunikationsendgerät zu senden.

Die Figur 1 zeigt darüber hinaus ein Ausführungsbeispiel für ein externes drahtloses Telekommunikationsendgerät, bei dem es sich beispielsweise um ein Mobilfunkkommunikationsendgerät in Form eines Smartphones handeln kann. Das Smartphone ist in der Figur 1 mit dem Bezugszeichen 100 gekennzeichnet.

Das Smartphone 100 umfasst eine Nahfeldkommunikationseinrichtung 115, die mit der Nahfeldkommunikationseinrichtung 15 der Ladestation 10 über eine Nahfeldkommunikationsverbindung in Verbindung stehen kann. Das Smartphone 100 ist darüber hinaus mit einer Fernfeldkommunikationseinrichtung 120 ausgestattet, die eine Fernfeldkommunikation mit der Fernfeldkommunikationseinrichtung 20 der Ladestation 10 ermöglicht.

Die Nahfeldkommunikationseinrichtung 115 sowie die Fernfeldkommunikationseinrichtung 120 stehen mit einer Recheneinrichtung 130 in Verbindung, an die ein Speicher 135 angeschlossen ist. In dem Speicher 135 ist ein Steuermodul in Form eines Steuersoftwaremoduls 140 abgespeichert, das es der Recheneinrichtung 130 ermöglicht, über eine Nahfeldkommunikation und/oder eine Fernfeldkommunikation eine Fernsteuerung zumindest einer, vorzugsweise aller den Ladevorgang der Ladestation 10 betreffenden Funktionen (Ladefunktionen) fernzusteuern. Neben einer Fernsteuerung der den Ladevorgang der Ladestation 10 betreffenden Funktionen (Ladefunktionen) ist das Smartphone 100 vorzugsweise auch geeignet, eine Authentifizierung des Smartphones 100 bzw. dessen Besitzers durchzuführen.

Nachfolgend wird beispielhaft erläutert, wie sich die Ladestation 10 mit Hilfe des Smartphones 100 fernsteuern lässt, um ein Authentifizieren zu ermöglichen und das Aufladen eines Elektrofahrzeugs mit elektrischer Energie fernzusteuern.

Wird das Smartphone 100 in den Empfangsbereich der Nahfeldkommunikationseinrichtung 15 der Ladestation 10 gebracht, so werden die Nahfeldkommunikationseinrichtung 115 des Smartphones 100 sowie die Nahfeldkommunikationseinrichtung 15 der Ladestation 10 eine Nahfeldkommunikation aufbauen. Im Rahmen dieser Nahfeldkommunikation wird das Smartphone 100 ein Authentifizierungssignal AUT - vorzugsweise in verschlüsselter Form - an die Ladestation übermitteln. Das Authentifizierungssignal AUT gelangt über die Nahfeldkommunikationseinrichtung 15 sowie das Schnittstellenmodul 25 zu dem Authentifizierungsmodul 35 der Ladestation 10. Das Authentifizierungsmodul 35 überprüft das Authentifizierungssignal AUT und stellt fest, ob das Smartphone 100 berechtigt ist, eine Fernsteuerung der Ladestation 10 vorzunehmen. Ist dies der Fall, so erzeugt das Authentifizierungsmodul 35 ein Freigabesignal FR, das zu der Steuereinrichtung 40 übermittelt wird. Nach Erhalt des Freigabesignals FR kann die Steuereinrichtung 40 mit Hilfe von Steuerbefehlen STB des Smartphones 100 ferngesteuert werden. Die Steuerbefehle STB werden vorzugsweise in verschlüsselter Form über die Nahfeldkommunikationseinrichtung 115 des Smartphones 100 zu der Nahfeldkommunikationseinrichtung 15 der Ladestation 10 übermittelt und vom Schnittstellenmodul 25 an die Steuereinrichtung 40 weitergeleitet. Die Steuereinrichtung 40 erzeugt unter Berücksichtigung der Steuerbefehle STB Steuersignale ST, mit der die Ladeeinrichtung 45 angesteuert wird.

Um eine Fernsteuerung der Ladestation 10 mit dem Smartphone 100 zu ermöglichen, ist dieses mit dem Steuerprogrammmodul 140 ausgestattet, bei dem es sich um eine sogenannte Applikation, umgangssprachlich auch kurz "App" genannt, des Smartphones 100 handeln kann. Applikationen bzw. "Apps" sind im Bereich der Smartphonetechnik bekannt, um zusätzliche Funktionen des Smartphones 100 je nach Benutzerwünschen zu ermöglichen.

Das Steuerprogrammmodul 140 ist vorzugsweise derart programmiert, dass es alle den Ladevorgang der Ladestation 10 betreffenden Ladefunktionen sowie auch den Authentifizierungsprozess zur Authentifizierung des Smartphones 100 bei der Ladestation 10 steuern bzw. bearbeiten kann.

Nachdem das Steuerprogrammmodul 140 des Smartphones 100 den elektrischen Anschluss 50 beispielsweise durch Öffnen der Verschlusskappe freigegeben hat, kann das zu ladende Elektrofahrzeug elektrisch an die Ladeeinrichtung 45 angeschlossen werden. Sobald der Anschluss fertiggestellt ist, kann durch eine entsprechende Bedienung des Smartphones 100 und die Erzeugung entsprechender Steuerbefehle STB der Ladevorgang eingestellt und gestartet werden. Darüber hinaus ist es möglich, den Ladestatus abzufragen, um über den Fortschritt des Ladevorganges Informationen zu erhalten. Empfängt die Steuereinrichtung 40 der Ladestation 10 einen Steuerbefehl zur Übermittlung von Daten, die den Ladevorgang betreffen, so wird sie ein entsprechendes Rückmeldesignal RS erzeugen und über das Rückmeldemodul 55 an das Schnittstellenmodul 25 übermitteln. Das Rückmeldesignal RS wird dann vorzugsweise über die Nahfeldkommunikationseinrichtung 15 und verschlüsselt an das Smartphone 100 übermittelt.

Wenn nach Abschluss des Authentifizierungsvorgangs das Smartphone 100 den Sende- bzw. Empfangsbereich der Nahfeldkommunikationseinrichtung 15 der Ladestation 10 verlässt, so wird die Qualität der Nahfeldkommunikationsverbindung eine vorgegebene Mindestschwelle unterschreiten. Sobald dies geschieht, wird das Umschaltmodul 30 der Ladestation 10 das Schnittstellenmodul 25 derart umschalten, dass entweder zusätzlich zu der Nahfeldkommunikation oder alternativ zur Nahfeldkommunikation eine Fernfeldkommunikation über die Fernfeldkommunikationseinrichtung 20 mit dem Smartphone 100 aufgebaut wird. Somit bleibt es auch nach einem Verlassen des Sende-/Empfangsbereichs der Ladestation 10 möglich, nach der Authentifizierung den weiteren Ladevorgang mit Hilfe des Smartphones 100 zu steuern, nämlich über die alternativ oder zusätzlich bestehende Fernfeldkommunikationsverbindung.

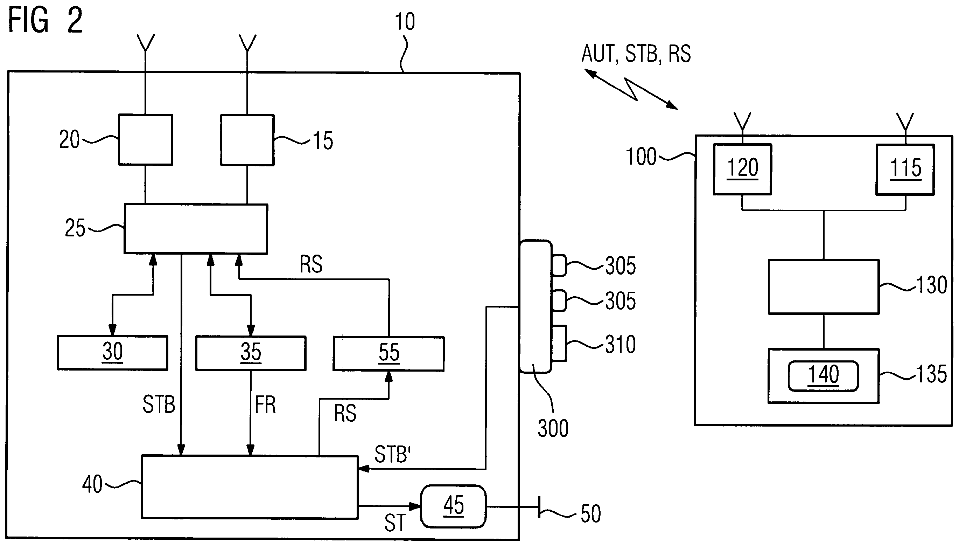

Die Figur 2 zeigt ein zweites Ausführungsbeispiel für eine Anordnung mit einer Ladestation 10 und einem Smartphone 100. Im Unterschied zu dem Ausführungsbeispiel gemäß Figur 1 ist die Ladestation 10 gemäß Figur 2 mit einer zusätzlichen Bedienungseinrichtung 300 ausgestattet, die Bedientasten 305 sowie eine Anzeigeeinrichtung 310 umfasst. Die Bedienungseinrichtung 300 ermöglicht nach einer mit Hilfe des Smartphones 100 erfolgten Authentifizierung über eine verschlüsselte Nahfeldkommunikationsverbindung die weitere Steuerung des Ladevorgangs und die Eingabe der den Ladevorgang betreffenden Steuerbefehle STB'. Bei der Anordnung gemäß Figur 2 hat ein Benutzer der Ladestation 10 also die Wahl, ob er die Steuerung der Ladestation 10 über sein Smartphone 100 oder über die Bedienungseinrichtung 300 vornehmen will.

Soll die Ladestation 10 mit Hilfe der Bedienungseinrichtung 300 gesteuert werden, so können mit den Bedientasten 305 Steuerbefehle STB' erzeugt und zur Steuereinrichtung 40 übertragen werden, damit diese geeignete Steuersignale ST zur Ansteuerung der Ladeeinrichtung 45 bilden und an die Ladeeinrichtung 45 übertragen kann.

Im Übrigen entspricht das Ausführungsbeispiel gemäß Figur 2 dem Ausführungsbeispiel gemäß Figur 1, so dass auf die obigen Ausführungen verwiesen sei. Insbesondere ist es auch bei der Anordnung gemäß Figur 2 möglich, alle den Ladevorgang betreffenden Ladefunktionen der Ladestation 10 mit Hilfe des Smartphones 100 fernzusteuern.

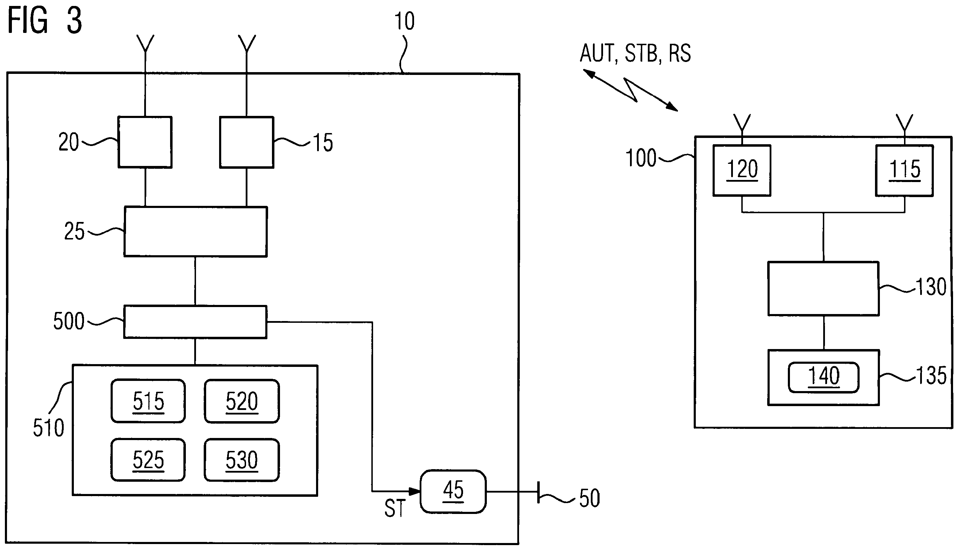

Die Figur 3 zeigt ein weiteres Ausführungsbeispiel für eine Anordnung mit einer Ladestation 10, die von einem Smartphone 100 gemäß Figur 1 oder 2 ferngesteuert werden kann. Man erkennt eine Nahfeldkommunikationseinrichtung 15 sowie eine Fernfeldkommunikationseinrichtung 20, die an ein Schnittstellenmodul 25 angeschlossen sind. Soweit entspricht das Ausführungsbeispiel gemäß Figur 3 den Ausführungsbeispielen gemäß den Figuren 1 und 2.

An das Schnittstellenmodul 25 ist jedoch eine Recheneinrichtung 500 angeschlossen, die mit einem Speicher 510 in Verbindung steht. In dem Speicher 510 sind ein Ladesteuerungssoftwaremodul 515, ein Rückmeldesoftwaremodul 520, ein Authentifizierungssoftwaremodul 525 sowie ein Umschaltsoftwaremodul 530 abgespeichert.

Wird von der Recheneinrichtung 500 das Rückmeldesoftwaremodul 520 ausgeführt, so übt die Recheneinrichtung 500 die Funktion eines Rückmeldemoduls 55 aus, wie es beispielhaft im Zusammenhang mit den Figuren 1 und 2 beschrieben worden ist.

Führt die Recheneinrichtung 500 das Authentifizierungssoftwaremodul 525 aus, so nimmt sie die Funktion des Authentifizierungsmoduls 35 wahr, wie es beispielhaft im Zusammenhang mit den Figuren 1 und 2 beschrieben worden ist.

Führt die Recheneinrichtung 500 das Umschaltsoftwaremodul 530 aus, so nimmt sie die Funktion eines Umschaltmoduls 30 wahr, wie es beispielhaft im Zusammenhang mit den Figuren 1 und 2 erläutert worden ist.

Die Funktion der in den Figuren 1 und 2 erläuterten Steuereinrichtung 40 wird von der Recheneinrichtung 500 wahrgenommen, wenn bzw. soweit sie das Ladesteuerungssoftwaremodul 515 gemäß Figur 3 ausführt.

Zusammengefasst sind also die im Zusammenhang mit den Figuren 1 und 2 beschriebenen Module 30, 35, 55 und 40 durch entsprechende Softwaremodule gebildet, die in der Figur 3 mit den Bezugszeichen 515, 520, 525 und 530 bezeichnet sind. Bezüglich der Funktionsweise der Ladestation 10 gemäß Figur 3 kann somit auf die obigen Ausführungen im Zusammenhang mit den Figuren 1 und 2 verwiesen werden.

Bei den Ausführungsbeispielen gemäß den Figuren 1 bis 3 wird es als vorteilhaft angesehen, wenn das Smartphone 100 über eine entsprechende Programmierung des Steuersoftwaremoduls 140 eine oder mehrere der nachfolgend aufgeführten und den Ladevorgang betreffenden Funktionen der Ladestation 10 steuern kann:
- Öffnen einer den elektrischen Anschluss 50 verschließenden oder abdeckenden Verschlusskappe, um eine elektrische Verbindung zwischen der Ladestation 10 und dem in der Figur 1 nicht dargestellten Elektrofahrzeug zu ermöglichen, und/oder Auslösen der Kabelfreigabe der Ladestation 10,
- Einstellen der Höhe des Ladestromes, Länge des Ladevorganges bzw. Definition der zu ladenden Energiemenge, vorzugsweise können einmal gewählte Optionen gespeichert und bei einem nächsten Ladevorgang direkt wieder verwendet werden,
- Beginnen des Ladevorgangs,
- Beenden des Ladevorgangs,
- Abfragen des Status des Ladevorgangs.

Vorzugsweise ist das Smartphone 100 über eine entsprechende Programmierung des Steuersoftwaremoduls 140 geeignet, eine oder mehrere der nachfolgend aufgeführten anderen Funktionen auszuüben:
- Suche und Reservierung der Ladestation 10 sowie Navigation des Inhabers des Smartphones 100 zur Ladestation 10,
- Identifikation des Nutzers zwecks Authorisierung zum Freigeben der Ladestation 10, beispielsweise über Kundenkarten-/Kreditkarteninformationen,
- Bereitstellung von Vertragsdaten zur Abrechnung, beispielsweise über Bereitstellung von Kundenkarten/Kreditkarteninformationen,
- Überblick über die Lade- und Abrechnungsdaten von mehreren zurückliegenden Ladevorgängen.

Vorteile der im Zusammenhang mit den Figuren 1 bis 3 beschriebenen Anordnungen bestehen beispielsweise in folgenden Punkten:
- Bedienelemente der Ladestation 10 können auch über Fernsteuerung vom Smartphone 100 aus bedient werden.
- Die Kopplung zwischen Ladestation 10 und Smartphone 100 kann über eine Nahfeldkommunikation aufgebaut werden, die besonders abhörsicher und manipulationssicher ist.
- Die Kopplung zwischen dem Smartphone 100 und der Ladestation 10 kann bis zum Ende des Ladevorganges über eine Nahfeldkommunikation und/oder über eine Fernfeldkommunikation aufrechterhalten werden.
- Die Bezahlung der an der Ladestation 10 entnommenen elektrischen Energie kann mittels des Smartphones 100 vorgenommen werden.
- Ein benutzerspezifisches Verhaltensprofil kann über das Smartphone 100 verwaltet werden, beispielsweise bezüglich der gewünschten Ladedauer, der gewünschten Tarifoptionen und/oder der gewünschten Energiemenge.
- Es können alle von der Ladestation 10 zur Verfügung gestellten Steuerbefehle nicht nur mit einer Bedienungseinrichtung der Ladestation, sondern auch über eine Fernsteuerung mit Hilfe eines Telekommunikationsendgerätes eingegeben werden.

## Patentansprüche

1. Ladestation (10) zum Laden eines Elektrofahrzeugs mit einer Steuereinrichtung (40) zur Steuerung des Ladevorgangs, **dadurch gekennzeichnet, dass**
- die Ladestation (10) eine mit der Steuereinrichtung (40) in Verbindung stehende Nahfeldkommunikationseinrichtung (15) aufweist, die eine elektromagnetische Nahfeldkommunikation mit einem externen drahtlosen Telekommunikationsendgerät (100) ermöglicht, und
- die Steuereinrichtung (40) derart ausgestaltet ist, dass sie eine Fernsteuerung zumindest einer den Ladevorgang betreffenden Funktion der Ladestation (10) durch das externe drahtlose Telekommunikationsendgerät (100) über die Nahfeldkommunikationseinrichtung (15) ermöglicht, wobei die Ladestation (10) eine Fernfeldkommunikationseinrichtung (20) aufweist, die eine elektromagnetische Fernfeldkommunikation mit dem externen drahtlosen Telekommunikationsendgerät (100) ermöglicht, wobei die Ladestation (10) ein Umschaltmodul (30) aufweist, das derart ausgestaltet ist, dass es eine Umschaltung einer bestehenden Nahfeldkommunikation über die Nahfeldkommunikationseinrichtung (15) auf eine Fernfeldkommunikation über die Fernfeldkommunikationseinrichtung (20) vornimmt, wenn das Empfangssignal der Nahfeldkommunikationseinrichtung (15) mangelhaft ist und dessen Qualität und/oder Signalpegel eine vorgegebene Mindestqualitätsschwelle oder Mindestpegelschwelle unterschreitet.

2. Ladestation nach Anspruch 1,
**dadurch gekennzeichnet, dass** die Steuereinrichtung (40) für alle für den Ladevorgang vorgesehenen Funktionen jeweils einen Steuerbefehl (STB) vorsieht, der über die Nahfeldkommunikationseinrichtung (15) zur Steuereinrichtung (40) übertragen und von der Steuereinrichtung (40) umgesetzt werden kann.

3. Ladestation nach einem der voranstehenden Ansprüche,
**dadurch gekennzeichnet, dass** die Steuereinrichtung (40) ein Authentifizierungsmodul (35) umfasst, das ein über die Nahfeldkommunikationseinrichtung (15) empfangenes Authentifizierungssignal (AUT) empfangen und verarbeiten kann.

4. Ladestation nach einem der voranstehenden Ansprüche,
**dadurch gekennzeichnet, dass** die Ladeeinrichtung (10) ein Rückmeldemodul (55) umfasst, das ein den Ladevorgang und/oder die Authentifizierung betreffendes Rückmeldesignal (RS) über die Nahfeldkommunikationseinrichtung (15) an das externe drahtlose Telekommunikationsendgerät (100) zurücksenden kann.

5. Ladestation nach einem der voranstehenden Ansprüche,
**dadurch gekennzeichnet, dass**
- die Steuereinrichtung (40) eine Rechnereinrichtung (500) und einen Speicher (510) umfasst und
- das Authentifizierungsmodul und/oder das Rückmeldemodul und/oder das Umschaltmodul durch Softwaremodule (520, 525, 530) gebildet sind, die in dem Speicher (510) gespeichert sind.

6. Anordnung mit einer Ladestation (10) nach einem der voranstehenden Ansprüche und einem drahtlosen Telekommunikationsendgerät (100).

## Claims

1. A charging station (10) for charging an electric vehicle with a control device (40) for controlling the charging process,
**characterized in that**
- the charging station (10) comprises a near-field communication device (15) in communication with the control device (40), which enables electromagnetic near-field communication with an external wireless telecommunication terminal (100), and
- said control device (40) is configured such that it allows remote control of at least one function related to the charging operation of said charging station (10) by said external wireless telecommunication terminal (100) via said near-field communication device (15), wherein said charging station (10) comprises a far-field communication device (20) allowing far-field electromagnetic communication with said external wireless telecommunication terminal (100), wherein the charging station (10) has a changeover module (30) which is designed such that it performs changeover of an existing near-field communication via the near-field communication device (15) to a far-field communication via the far-field communication device (20) if the reception signal of the near-field communication device (15) is defective and quality and/or signal level thereof fall below a predetermined minimum quality threshold or minimum level threshold.

2. The charging station according to claim 1,
**characterized in that**
the control device (40) provides a control command (STB) for each of the functions provided for the charging process, which may be transmitted via the near-field communication device (15) to the control device (40) and may be implemented by the control device (40).

3. The charging station according to any of the preceding claims,
**characterized in that**
the control device (40) comprises an authentication module (35) which can receive and process an authentication signal (AUT) received by the near-field communication device (15).

4. The charging station according to one of the preceding claims,
**characterized in that**
the charging device (10) comprises a feedback module (55), which can send back a feedback signal (RS) concerning the charging process and/or authentication of the near-field communication device (15) to the external wireless telecommunication terminal (100)

5. The charging station according to claim 4,
**characterized in that**
- the control device (40) comprises a computing device (500) and a memory (510), and
- the authentication module (35) and/or the feedback module (55) and/or the changeover module (30) are formed by software modules (520, 525, 530) which are stored in the memory (510).

6. An arrangement comprising a charging station (10) according to one of the preceding claims and a wireless telecommunication terminal (100).

## Revendications

1. Station de charge (10) servant à charger une véhicule électrique et comportant un dispositif de commande (40) qui commande l'opération de charge,
**caractérisée en ce que**
- la station de charge (10) comporte un dispositif de communication en champ proche (15) qui est en liaison avec le dispositif de commande (40), qui permet une communication électromagnétique en champ proche avec un terminal de télécommunication sans fil externe (100), et
- le dispositif de commande (40) est réalisé de telle manière qu'il permet au terminal de télécommunication sans fil externe (100) de commander à distance au moins une fonction de la station de charge (10) liée à l'opération de charge par l'intermédiaire du dispositif de communication en champ proche (15), **en ce que** la station de charge (10) comporte un dispositif de communication en champ lointain (20) qui permet une communication électromagnétique en champ lointain avec le terminal de télécommunication sans fil externe (100), **en ce que** la station de charge (10) comporte un module de commutation (30) qui est réalisé de telle manière qu'il procède à une commutation d'une communication en champ proche existante par l'intermédiaire du dispositif de communication en champ proche (15) sur une communication en champ lointain par l'intermédiaire du dispositif de communication en champ lointain (20) lorsque le signal de réception du dispositif de communication en champ proche (15) est insuffisant et dont la qualité et/ou le niveau du signal est en dessous d'un seuil minimal de qualité ou d'un seuil minimal de niveau.

2. Station de charge selon la revendication 1,
**caractérisée en ce que**
le dispositif de commande (40) prévoit pour toutes les fonctions prévues pour l'opération de charge respectivement une instruction de commande (STB) qui est transmise par l'intermédiaire du dispositif de communication en champ proche (15) au dispositif de commande (40) et qui peut être réalisée par le dispositif de commande (40).

3. Station de charge selon l'une des revendications précédentes,
**caractérisée en ce que**
le dispositif de commande (40) comporte un module d'authentification (35) qui peut recevoir et traiter un signal d'authentification (AUT) reçu par l'intermédiaire du dispositif de communication en champ proche (15).

4. Station de charge selon l'une des revendications précédentes,
**caractérisée en ce que**
le dispositif de charge (10) comporte un module d'accusé de réception (55) qui peut renvoyer un signal de confirmation (RS) lié à l'opération de charge et/ou à l'authentification par l'intermédiaire du dispositif de communication en champ proche (15) au terminal de télécommunication sans fil externe (100).

5. Station de charge selon la revendication 4,
**caractérisée en ce que**
- le dispositif de commande (40) comporte une unité ordinateur (500) et une mémoire (510) et
- le module d'authentification (35) et/ou le module d'accusé de réception (55) et/ou le module de commutation (30) sont formés par des modules logiciels (520, 525, 530) qui sont mémorisés dans la mémoire (510).

6. Système comportant une station de charge (10) selon l'une des revendications précédentes et un terminal de télécommunication sans fil (100).
